# EUROPEAN PATENT APPLICATION

(11) **EP 1 826 052 A1**
(43) Date of publication of application: **29.08.2007**
(21) Application number: 05706641.7
(22) Date of filing: 22.02.2005
(51) Int. Cl.: B60K 17/00

(54) **SAND VEHICLE WITH INTEGRATED ENGINE**

(30) Priority: 12.11.2004 CN 200420095163
(71) Applicant: Hu, Ji-Rong, Yong Kang, Zhejiang 321307 (CN)
(72) Inventor: Hu, Ji-Rong, Yong Kang, Zhejiang 321307 (CN)
(74) Representative: Meyer-Dulheuer, Karl-Hermann
(86) International application number: PCT/CN2005/000204
(87) International publication number: WO 2006/050643

(57) **Abstract**

The present invention relates to an integrated engine for beach cruisers comprising a speed variator (2), a rear gear box component (3), a shaft (4), a left crankcase component (5) and a left crankcase cap component (6); the rear gear box component (3), the left crankcase component (4) and the left crankcase cap component (6) are connected to form a closed housing structure; the present invention also comprises an engine (1), a differential (7) and a gear shift device; the engine (1) is directly connected with the speed variator (2); the differential (7) is disposed between the speed variator (2) and the shaft (4); the speed variator (2) comprises an automatic indefinite speed variator mechanism (2A) and a gear double reduction mechanism (2B); the gear shift device is disposed in the gear double reduction mechanism (2B); the differential (7) can be manually operated so as to actuate or cancel the differential function. The present invention of the above structure allows users to opt for the reverse gear and differential function. It also has the advantages of low noise, high efficiency, easy maintenance and small size and is suitable for application in beach cruisers.

## Description

### Technical Field

The present invention relates to an engine and more particularly pertains to an engine with integrated energy input and output for beach cruisers.

### Background Art

The available beach cruisers in the marketplace use motorcycle engines or scooter engines. Whichever kind of engine a beach cruiser uses, its rear is disposed with an independent rear axle. The engine and the rear axle are separated and are either chain-driven or shaft-driven. The beach cruiser as a whole has an independent reverse gear and only one differential function. The above structure has the following disadvantages: 1. Since beach cruisers are often used in extreme circumstances in which chain gears and chains are exposed, machine parts easily wear out and malfunction occurs frequently. Maintenance is also difficult. 2. Since the engine, rear axle and the reverse gear mechanism are separately disposed, the whole construction is bulky and overall modeling of beach cruisers is difficult. 3. Machines are of low efficiency but high energy consumption. 4. Machine parts produce great noise in operation. 5. The differential is unifunctional and cannot fulfill diverse needs of users.

### Disclosure of the Invention

In view of the aforesaid disadvantages now present in the prior art, it is an object of the present invention to provide an integrated engine for beach cruisers which allows users to opt for the reverse gear and differential function. It also has the advantages of low noise, high efficiency, easy maintenance and small size and is suitable for application in beach cruisers.

To attain this, the present invention generally comprises a speed variator, a rear gear box component, a shaft, a left crankcase component and a left crankcase cap component; the rear gear box component, the left crankcase component and the left crankcase cap component are connected to form a closed housing structure. The present invention also comprises an engine directly connected with the speed variator; the output end of the speed variator is connected with the shaft by spline connection.

As an improvement of the present invention, the speed variator of the present invention is formed by connecting an automatic indefinite speed variator mechanism and a gear double reduction mechanism.

As a further improvement of the present invention, the shaft is divided into left and right shafts; a differential is disposed between the speed variator and the left and right shafts. The differential comprises a differential casing, a pin shaft and four meshing conical gears.

As a first advancement of the present invention, a hole is disposed on the pin shaft of the differential; the facing ends of the left and right shafts are disposed with internal splined holes; the left and right shafts can be connected by a spline shaft; the right shaft is a hollow structure; the outer surface of the right end of its push-and-pull shaft is disposed with screw rings cooperating with a screw hole and a screw nut disposed on the right end of the right shaft.

As a second advancement of the present invention, the left shaft is disposed with a shifting mechanism and the two are connected by spline connection; a shifting piece is fixedly disposed on the shifting mechanism; the right side of the shifting piece is disposed with kidney-shaped hooks; kidney-shaped slots cooperating with the kidney-shaped hooks are disposed on a main gear; three kidney-shaped hooks are evenly distributed on the right side of the shifting piece; six kidney-shaped slots are evenly distributed on the main gear.

As an ultimate improvement of the present invention, the gear double reduction mechanism of the present invention is also disposed with a reverse gear shaft component, a gear shift piece and a reverse gear shift fork; the gear shift piece is connected with a middle shaft by spline connection; the middle shaft is disposed with a middle shaft gear. A left gear of the main shaft meshes with a left gear of the reverse gear shaft; a right gear of the reverse gear shaft meshes with the middle gear of the middle shaft; a right gear of the main shaft meshes with a right gear of the middle shaft.

In the improved embodiment of the present invention, the speed variator of the present invention is formed by connecting an automatic indefinite speed variator mechanism and a gear double reduction mechanism. This effectively increases transmission efficiency, lower noises and error rates. Since the present invention does not need frequent adjustments as in chain-driven mechanisms, maintenance is easier. By using the first or second advancement of the present invention, the differential of the present invention has optional differential function and users of the beach cruiser can opt to or not to use the differential function according to road conditions. Through the ultimate improvement of the present invention, the present invention also has a reverse gear function. Moreover, the present invention has its engine, speed variator, reverse gear mechanism, differential, shafts and housing components all integrated. It decreases the occupied space of the above components and has more compact structures. It optimizes the structure and modeling of the beach cruiser.

### Brief Description of Drawings

FIG. 1 shows the structure of the present invention.
FIG. 2 shows the structure of the controllable differential of the present invention (embodiment 1).
FIG. 3 shows the connection of the spline shaft and the push-and-pull shaft of the present invention.
FIG. 4 shows the structure of the pin shaft of the present invention.
FIG. 5 shows the structure of the controllable differential of the present invention (embodiment 2).
FIG. 6 shows the structure of the reverse gear device of the present invention.

### Best Mode for Carrying out the Invention

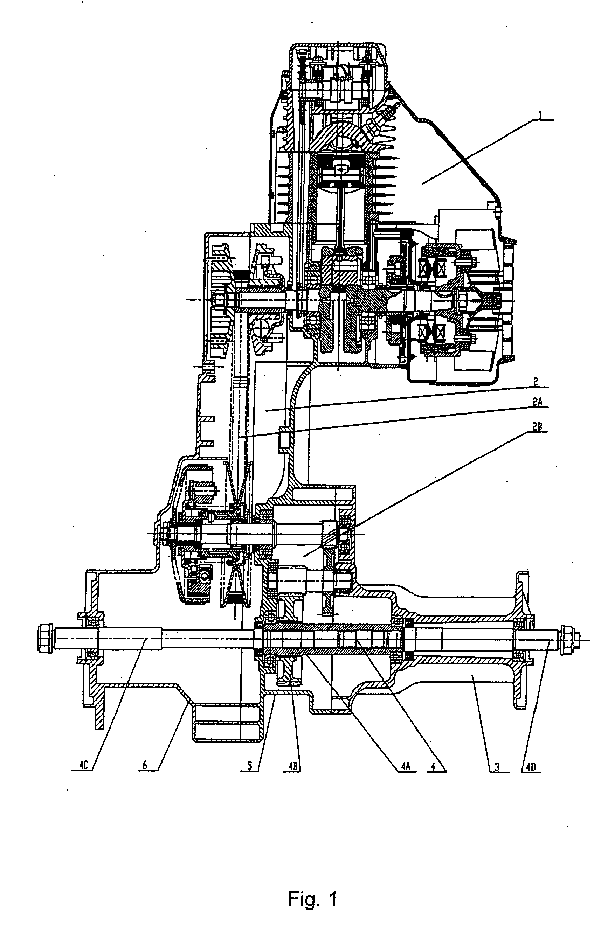

FIG. 1 shows the structure of the present invention. It comprises a speed variator 2, a rear gear box component 3, a shaft 4, a left crankcase component 5 and a left crankcase cap component 6; the output end of the speed vairator 2 is connected with the shaft 4 by spline connection; the rear gear box component 3, the left crankcase component 5 and the left crankcase cap component 6 are connected to form a closed housing structure; the structure also comprises an engine 1 directly connected with the speed variator 2. The speed variator 2 is formed by connecting an automatic indefinite speed variator mechanism 2A and a gear double reduction mechanism 2B. The automatic indefinite speed variator mechanism 2A is connected with the engine 1 and the main gear 4B of the gear double reduction mechanism 2B is connected with a shaft sleeve 4A by spline connection; the shaft 4 is divided into a left shaft 4C and a right shaft 4D; the shaft sleeve 4A is connected with the left and right shafts 4C, 4D by spline connection. When the engine is activated, energy is transmitted through the above components in sequence and finally reaches the left and right shafts 4C, 4D so that the two shafts spin at the same speed.

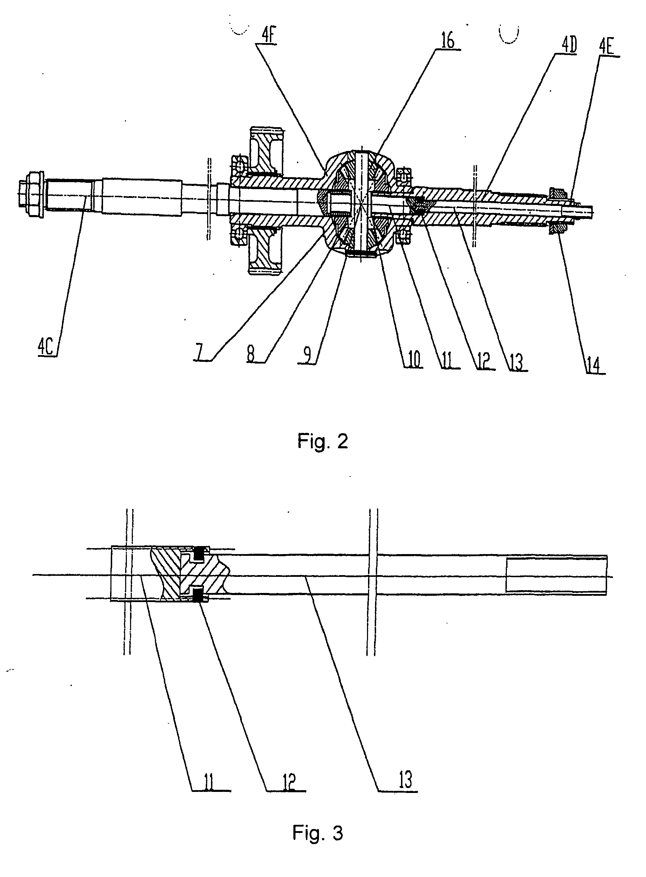

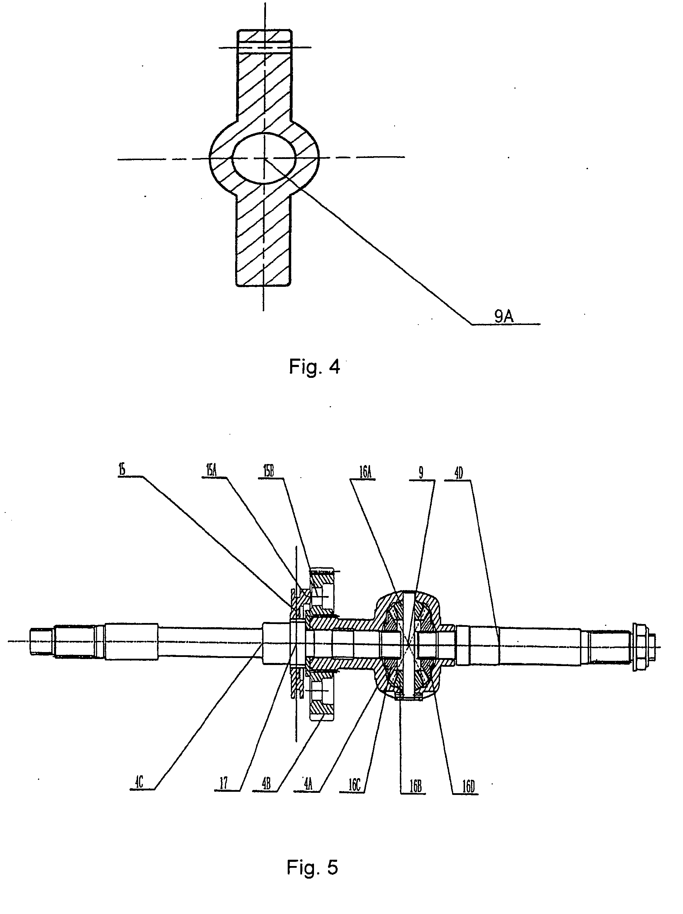

FIGS. 2 to 4 show an embodiment of the controllable differential (embodiment 1). As illustrated in FIG. 2, the facing ends of the left and right shafts 4C, 4D are disposed with splined holes 8 and 10. As illustrated in FIG. 4, a hole 9A is disposed on a pin shaft 9. This structure allows a spline shaft 11 to slide freely in the splined holes 8 and 10. As illustrated in FIG. 2, when the spline shaft 11 slides into the splined hole 8, the left and right shafts 4C, 4D are connected, thereby ensuring equal spinning speed of the left and right shafts 4C, 4D. The right shaft 4D is a hollow structure and its right end is disposed with a screw hole 4E. A push-and-pull shaft 13 is disposed in the right shaft 4D; the outer surface of its right end is disposed with screw rings cooperating with a screw hole 4E and a screw nut 14; the differential 7 comprises a differential casing 4F, a pin shaft 9 and four meshing conical gears 16. When differential function is needed, the push-and-pull shaft 13 spins outwardly and the spline shaft 11 is pulled to the right side of the pin shaft 9. When differential function is not needed, the push-and-pull shaft 13 is spinned so that the spline shaft 11 is pushed into the splined hole 8 of the left shaft 4C. The spline shaft 11 is then connected to both the left and right shafts 4C and 4D, thereby ensuring that the two wheels spin at the same speed. Under the above two circumstances, adjustments should be made after the engine stops rotating and the push-and-pull shaft 13 should be tightly locked with the screw nut 14 after rotating. As illustrated in FIG. 3, the spline shaft 11 and the push-and-pull shaft 13 are movably connected by a connecting pin 12.

FIG. 5 shows the structure of the controllable differential of the present invention (embodiment 2). As illustrated in FIG. 5, the left shaft 4C is disposed with a shifting mechanism 17 and the two are connected by spline connection; a shifting piece 15 is fixedly disposed on the shifting mechanism 17; three kidney-shaped hooks 15A are evenly distributed on the right side of the shifting piece 15; six kidney-shaped slots 15B cooperating with the kidney-shaped hooks 15A are evenly distributed on the main gear 4B. When differential function is needed, the kidney-shaped hooks 15A and the kidney-shaped slots 15B are separated through the shifting mechanism 17, thereby enabling the differential function. When differential function is not needed, the kidney-shaped hooks 15A and the kidney-shaped slots 15B are moved to meshed positions through the shifting mechanism 17. If the beach cruiser uses its left shaft 4C as the inner shaft when turning, the left and right shafts spin at the same speed since the main gear 4B directly transmits the torque to the left shaft 4C. If the beach cruiser uses its right shaft 4D as the inner shaft when turning, since the conical gears 16A, 16B are fixed with the shaft sleeve 4A by the pin shaft 9 and the conical gear 16C is fixed with the left shaft 4C, the conical gears 16A, 16B and the conical gear 16C do not spin relatively so that the conical gear 16D cannot spin correspondingly. The left and right shafts 4C, 4D thereby spin at the same speed.

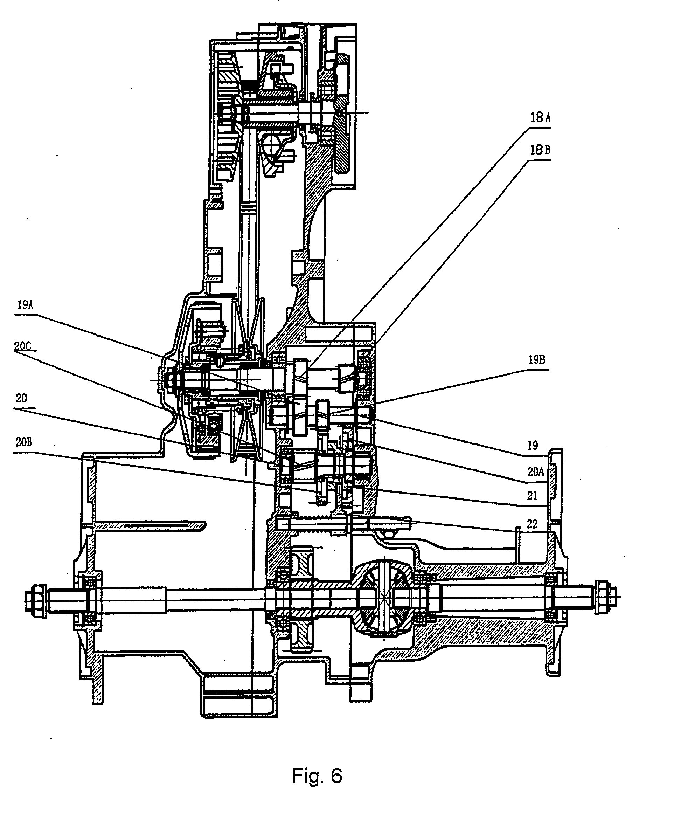

As illustrated in FIG. 1 and FIG. 6, the gear double reduction mechanism 2B is also disposed with a reverse gear shaft component 19, a gear shift piece 21 and a reverse gear shift fork 22; the gear shift piece 21 is connected with a middle shaft 20 by spline connection and it can slide to the left and right sides along the middle shaft 20; reverse gears 19A, 19B are disposed on the reverse gear shaft component 19; a middle gear 20B of the middle shaft and the right gear 20A of the middle shaft can slide relatively along the middle shaft 20; the left gear 20C of the middle shaft and the middle shaft 20 form an integrated structure.

When the beach cruiser is to move forward, the gear shift piece 21 is moved to the right by the reverse gear shift fork 22 so that it meshes with the right gear 20A of the middle shaft. Since the right gear 18B of the main shaft and the right gear 20A of the middle shaft are meshed, torque is transmitted to the right gear 18B of the main shaft, the right gear 20A of the middle shaft, the gear shift piece 21, the middle shaft 20, the left gear 20C of the middle shaft, the main gear 4B and finally reaches the left and right shafts 4C, 4D.

When the beach cruiser is to move backward, the gear shift piece 21 is moved to the left so that it meshes with the middle gear 20B of the middle shaft. Since the middle gear 20B of the middle shaft and the right gear 19B of the reverse gear shaft are meshed and the left gear 19A of the reverse gear shaft and the left gear 18A of the main shaft are meshed, torque is transmitted to the left gear 18A of the main shaft, the left gear 19A of the reverse gear shaft, the right gear 19B of the reverse gear shaft, the middle gear 20B of the middle shaft, the gear shift piece 21, the middle shaft 20, the left gear 20C of the middle shaft, the main gear 4B and finally reaches the left and right shafts 4C, 4D.

## Claims

1. An integrated engine for beach cruisers comprising a speed variator 2, a rear gear box component 3, a shaft 4, a left crankcase component 5 and a left crankcase cap component 6; the rear gear box component 3, the left crankcase component 5 and the left crankcase cap component 6 are connected to form a closed housing structure, wherein it also comprises an engine 1 directly connected with the speed variator 2; the output end of the speed variator 2 is connected with the shaft 4 by spline connection.

2. The integrated engine for beach cruisers as in Claim 1, wherein the speed variator 2 is formed by connecting an automatic indefinite speed variator mechanism 2A and a gear double reduction mechanism 2B.

3. The integrated engine for beach cruisers as in Claims 1 or 2, wherein the shaft 4 is divided into left and right shafts 4C, 4D; a differential 7 is disposed between the speed variator 2 and the left and right shafts 4C, 4D.

4. The integrated engine for beach cruisers as in Claim 3, wherein a hole 9A is disposed on a pin shaft 9; the facing ends of the left and right shafts 4C, 4D are disposed with internal splined holes 8, 10; a spline shaft 11 of one of the internal splined holes 10 can slide into the other internal splined hole 8 so that the left and right shafts 4C, 4D can be connected.

5. The integrated engine for beach cruisers as in Claim 4, wherein the right shaft 4D is a hollow structure; its push-and-pull shaft 13 is connected with the spline shaft 11 by a connection pin 12.

6. The integrated engine for beach cruisers as in Claim 5, wherein the outer surface of the right end of push-and-pull shaft 13 is disposed with screw rings cooperating with a screw hole 4E and a screw nut 14.

7. The integrated engine for beach cruisers as in Claim 3, wherein the left shaft 4C is disposed with a shifting mechanism 17 and the two are connected by spline connection; a shifting piece 15 is fixedly disposed on the shifting mechanism 17; the right side of the shifting piece 15 is disposed with kidney-shaped hooks 15A; kidney-shaped slots 15B cooperating with the kidney-shaped hooks 15A are disposed on a main gear 4B.

8. The integrated engine for beach cruisers as in Claim 7, wherein three kidney-shaped hooks 15A are evenly distributed on the right side of the shifting piece 15.

9. The integrated engine for beach cruisers as in Claim 7 or Claim 8, wherein six kidney-shaped slots 15B are evenly distributed on the main gear 4B.

10. The integrated engine for beach cruisers as in any one of Claims 2 to 9, wherein the gear double reduction mechanism 2B is also disposed with a reverse gear shaft component 19, a gear shift piece 21 and a reverse gear shift fork 22; the gear shift piece 21 is connected with a middle shaft 20 by spline connection; the middle shaft 20 is disposed with a middle shaft gear 20B.
